**Europäisches Patentamt**

**European Patent Office**

**Office européen des brevets**

(19)

(11) Numéro de publication : **0 328 471 B1**

(12) **FASCICULE DE BREVET EUROPEEN**

(45) Date de publication du fascicule du brevet :
23.09.92 Bulletin 92/39

(51) Int. Cl.⁵ : **B23P 19/04**

(21) Numéro de dépôt : **89440012.6**

(22) Date de dépôt : **13.02.89**

(54) **Procédé d'assemblage automatique d'une pièce conique scindée dans une coupelle et moyens destinés à le mettre en oeuvre.**

(30) Priorité : **12.02.88 FR 8801839**

(43) Date de publication de la demande :
**16.08.89 Bulletin 89/33**

(45) Mention de la délivrance du brevet :
**23.09.92 Bulletin 92/39**

(84) Etats contractants désignés :
**DE ES GB IT SE**

(56) Documents cités :
**US-A- 2 215 134**
**US-A- 3 266 132**
**US-A- 3 568 292**

(73) Titulaire : **ROLAND BAILLY ASSEMBLAGES, S.A.**
**5, rue Bernard Palissy Z.I. Trépillot**
**F-25000 Besançon (FR)**

(72) Inventeur : **Bailly, Roland**
**1, rue de la Gare**
**F-25720 Beure (FR)**
Inventeur : **Bonvalot, Pierre**
**Rue du Côteau**
**Pirey F-25480 Miserey (FR)**

(74) Mandataire : **Metz, Paul**
**CABINET METZ PATNI 63, rue de la Ganzau**
**B.P. 63**
**F-67024 Strasbourg (FR)**

EP 0 328 471 B1

# Description

La présente invention se rapporte à un procédé d'introduction et de mise en place à grande cadence de pièces coniques dans des coupelles correspondantes servant de réceptacles ou de logements, selon le préambule de la revendication 8.

Elle se rapporte également à une machine automatique selon le préambule de la revendication 1 et 3 destinée à mettre en oeuvre ce procédé.

Un tel procédé et une telle machine sont connus de l'art antérieur, par exemple, par le document US-A-3568292.

Des ensembles de ce type formés d'une pièce en forme de douille conique immobilisée dans une coupelle sont employés principalement en automobile. Ils servent de pièces de butée aux ressorts de tige de soupape. Les pièces coniques sont creuses et fendues longitudinalement. Elles présentent une saillie périphérique intérieure au voisinage de leur extrémité. Elles sont immobilisées transversalement dans le passage d'une coupelle servant de rondelle-butée au ressort de soupape.

Cet ensemble servant de butée en forme de coupelle garnie intérieurement de la pièce intermédiaire conique est monté à force sur l'extrémité de la tige de soupape et s'y trouve immobilisé longitudinalement, l'encliquetage résultant de la pénétration du bourrelet dans la rainure.

Pour des raisons de facilité d'introduction, la pièce de garniture en forme de douille conique est scindée longitudinalement en deux parties identiques.

Ces deux demi-douilles sont à introduire automatiquement et simultanément côte à côte dans le passage central de chaque coupelle.

Ces pièces en nombre équivalent au nombre de soupapes sont à produire et à assembler en quantités industrielles.

L'objet de la présente invention concerne un procédé et une machine pour l'assemblage automatique à haute cadence.

On connaît déjà des procédés et des machines utilisés aux mêmes buts.

Toutefois, les procédés employés aboutissent à des machines d'un encombrement prohibitif et d'un prix élevé peu compatible avec le coût supportable de la pièce ainsi assemblée.

Bien que satisfaisantes sur le plan de la fabrication en série, ces machines ne constituent pas une solution valable au plan industriel en raison de leur coût et de leur limitation en cadence.

De plus, les arrêts provenant des bourrages ou des coincements de pièces dans les circuits d'alimentation font chuter notablement le rythme de production. C'est le cas par exemple de la machine décrite dans le document US-A-3,658,292. Cette machine pour la mise en place de pièces en bi-cônes dans une coupelle sur la queue d'une soupape présente en deux voies d'alimentation en pièces conformées en bi-cônes. Ces voies sont inclinées symétriquement par rapport à la verticale et associées à un dispositif magnétique de retenue des pièces au-dessus de la coupelle. Ce dispositif ne permet pas d'éviter les coincements et bourrages.

La présente invention a pour but de remédier à l'ensemble de ces divers inconvénients en proposant un procédé de montage automatique à grande cadence et la machine destinée à le mettre en oeuvre pour introduire automatiquement les douilles dans les coupelles correspondantes.

A cet effet, la machine automatique objet de la présente invention est définie par la combinaison des caractéristiques selon la revendication 1 et 3.

Le procédé est du type indiqué initialement et il se montre remarquable en ce qu'il consiste à alimenter les pièces en demi-cône debout, orientées et juxtaposées, par deux chemins convergeant vers le bas, à les introduire simultanément côte à côte dans un dispositif de transfert, à les maintenir côte à côte pendant toute la durée du transfert jusqu'à un poste de garnissage, à les évacuer côte à côte et à les introduire dans une coupelle avec l'assistance d'un dispositif d'accompagnement du mouvement jusqu'à leur chargement complet, puis à évacuer les coupelles ainsi garnies.

La supériorité de l'invention réside dans son originalité qui lui confère les avantages importants suivants :

. simplicité des moyens mis en oeuvre

. fiabilité importante

. grandes cadences possibles sans ennuis de coincement des pièces

. encombrement réduit

. coût particulièrement compétitif.

L' invention sera bien comprise à la lecture de la description qui suit, effectuée à titre d'exemple non imitatif sur un mode d'exécution en référence aux dessins accompagnants dans lesquels :

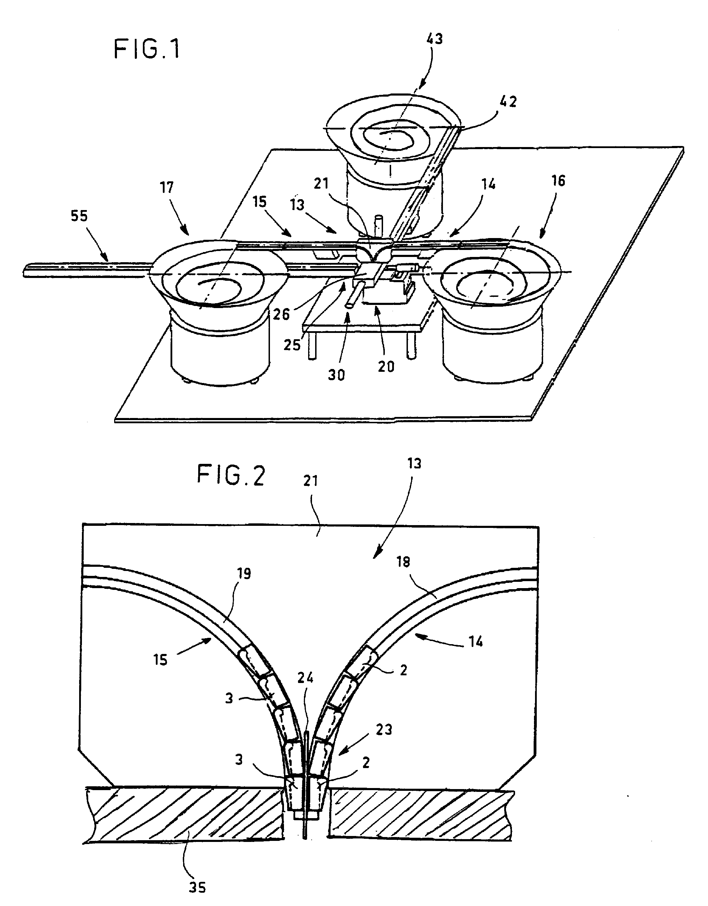

. la figure 1 est une vue schématique générale en perspective de la machine d'assemblage selon l'invention montrant les différents postes ;

. la figure 2 est une vue en élévation de la partie centrale du poste d'alimentation et plus particulièrement des guides d'amenée ;

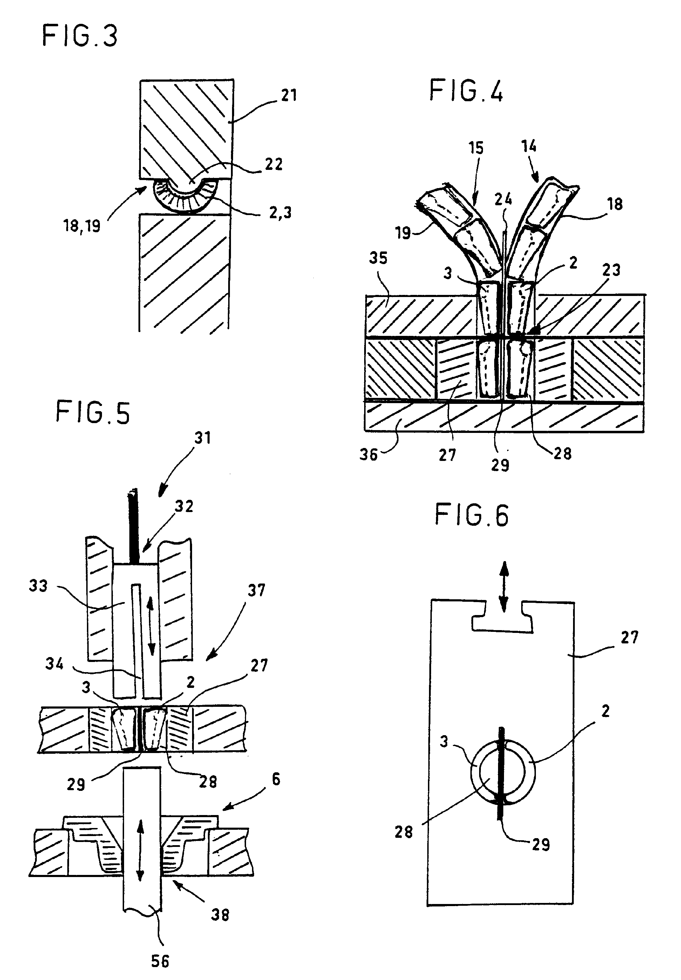

. la figure 3 est une vue en coupe transversale montrant un exemple de forme de section droite des guides d'amenée avec une pièce en demi-cône vue en coupe ;

. la figure 4 est une vue schématique de détail en coupe verticale de l'extrémité des guides d'amenée, tiroir chargé et disposé à la sortie des guides ;

. la figure 5 est une vue schématique de détail en coupe transversale verticale du poste d'assemblage au niveau du tiroir de réunion et de distribution en position de dépose des pièces en demi-cône ;

. la figure 6 est une vue schématique en plan du poste de garnissage des coupelles ;

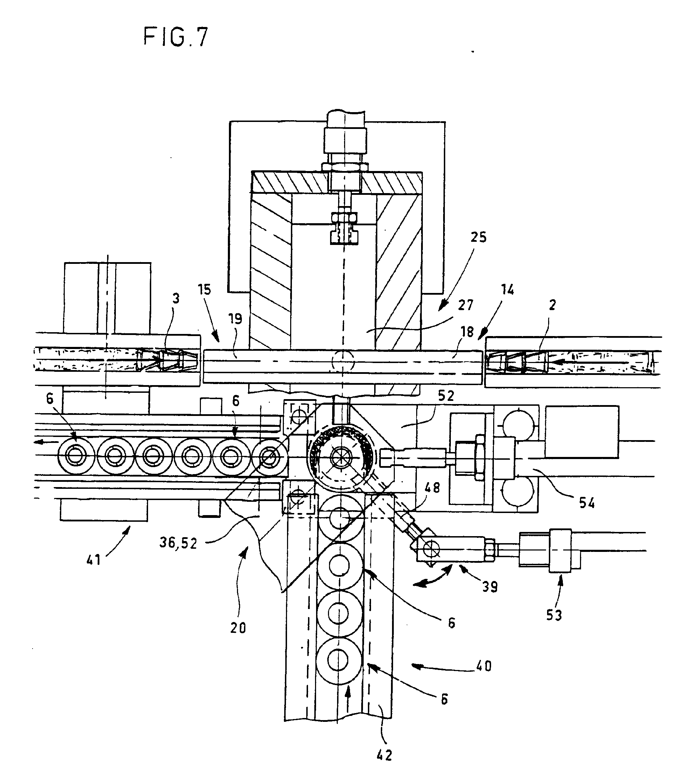

. la figure 7 est une vue générale en plan des postes de distribution, de transfert et de garnissage des coupelles ;

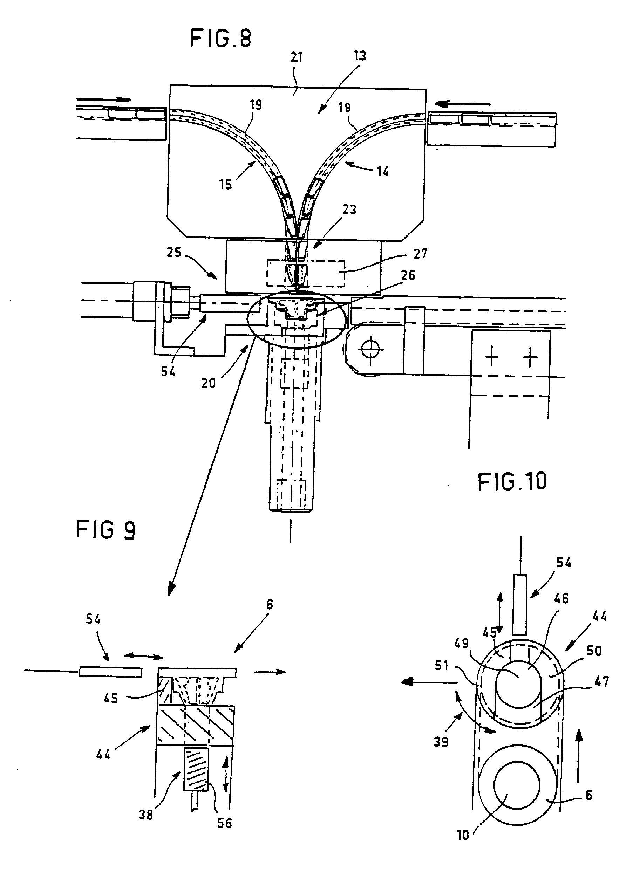

. la figure 8 est une vue en coupe verticale du poste de chargement des coupelles montrant également l'alimentation en pièces de forme en demi-cône ;

. la figure 9 est une vue en coupe verticale du support de garnissage des coupelles et quelques éléments voisins ;

. la figure 10 est un agrandissement sur partie centrale du support de chargement vue en plan ;

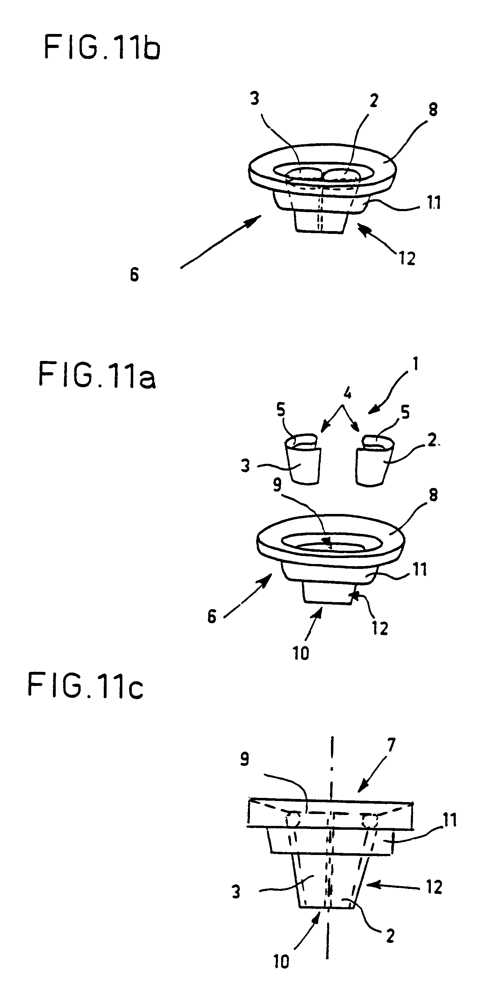

. les figures 11 a,b,c sont des vues représentant l'ensemble des différentes pièces à monter respectivement en perspective à l'état dissocié et à l'état monté, en perspective et en coupe verticale ;

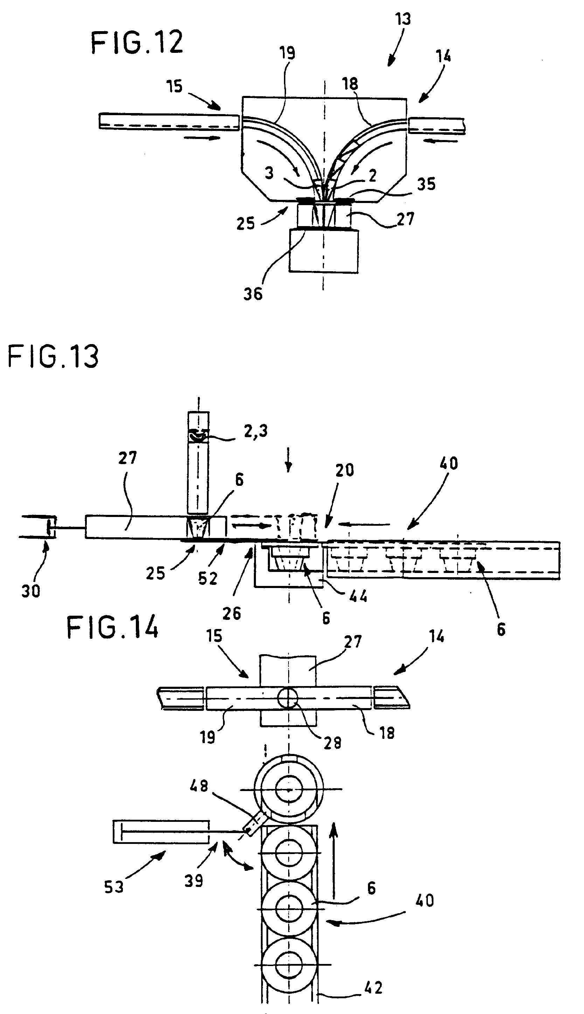

. les figures 12 à 19 sont des schémas de fonctionnement illustrant les principales phases du procédé selon l'invention à savoir :

. figure 12 : amenée individuelle de chaque pièce en demi-cône ;

. figure 13 : descente des coupelles dans le tiroir

. figure 14 : orientation des cavités réceptrices

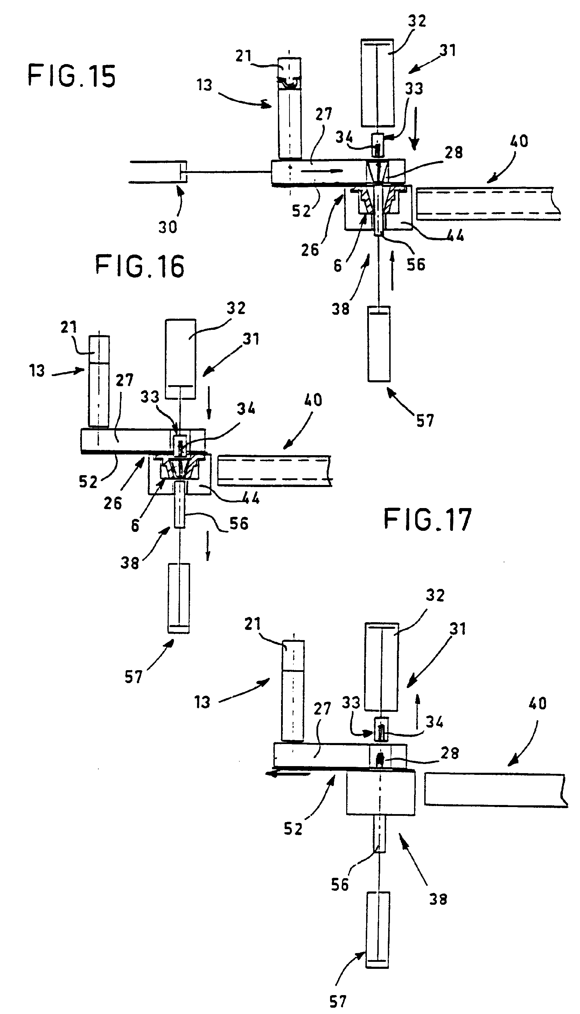

. figure 15 : présentation des pièces en demi-cône et maintien à l'entrée du poste de garnissage ;

. figure 16 : introduction des pièces en demi-cône par le vérin de descente

. figure 17 : retrait du vérin de descente

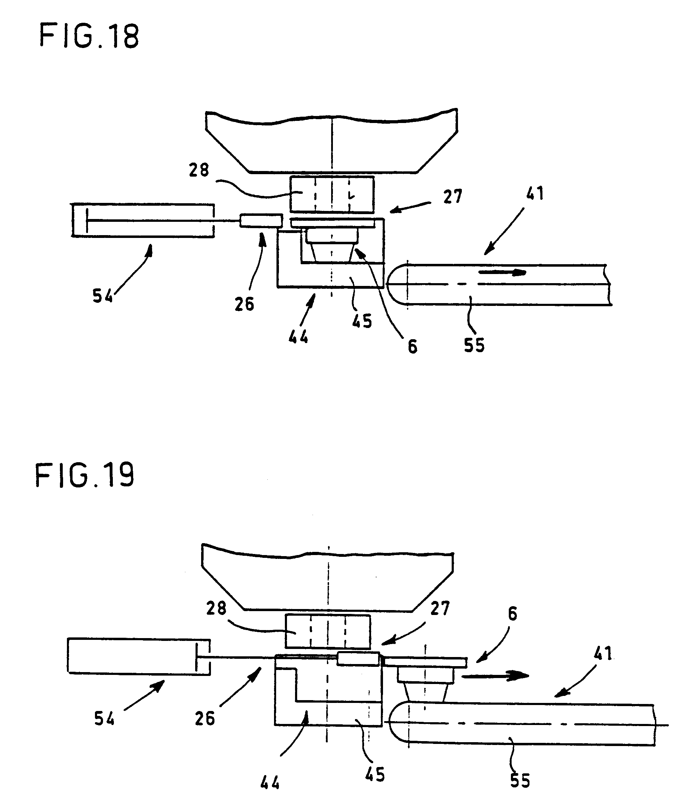

. figure 18 : mise en place du vérin d'évacuation

. figure 19 : évacuation des coupelles garnies.

Le procédé utilisé dans le cadre de la présente invention concerne l'introduction et la mise en place automatiques dans une coupelle d'une pièce de garnissage conique scindée longitudinalement en deux parties connues sous les termes de demi-cônes ou bicônes. Il est bien entendu que diverses pièces analogues assemblées de la même façon entrent aussi bien dans le cadre de la présente invention.

On décrira ci-après tout d'abord sommairement le procédé selon l'invention puis les moyens destinés à le mettre en oeuvre dans le cadre de l'invention.

Afin de mieux comprendre les développements descriptifs ci-après, on décrira tout d'abord les pièces à assembler représentées sur les figures 11a, b, c.

Les pièces à assembler se composent de façon générale d'une douille conique 1 scindée en deux demi-parties longitudinales 2 et 3 qui seront appelées ci-après, pour des raisons d'uniformité de terminologie, demi-cônes. Ces demi-cônes forment une douille complète par juxtaposition latérale de deux pièces semblables et maintien à l'intérieur d'un corps creux récepteur de forme adaptée. Les douilles présentent au niveau de leur bord supérieur une saillie périphérique intérieure 4 conformée en bourrelet 5 dirigé vers l'intérieur. Cette saillie en bourrelet permet l'immobilisation à l'extrémité des tiges.

Ces corps creux récepteurs sont réalisés sous la forme d'une coupelle 6 présentant une surface supérieure 7 conformée en disque 8 dont la partie centrale affecte la forme d'une cuvette 9. Chaque coupelle comporte un passage central 10 très légèrement conique servant de logement aux douilles coniques 1 formées des demi-cônes qui garniront complètement toute la surface latérale intérieure dudit passage 10 après introduction et mise en place des demi-cônes. La coupelle se poursuit vers le bas par un épaulement 11 servant de surface d'appui et de butée à l'extrémité des ressorts coaxiaux de soupapes sur les tiges desquelles elles sont montées. La coupelle se termine vers le bas par une naissance 12 légèrement conique constituant la zone d'entrée et le tronçon de centrage et de maintien du ressort coaxial de soupape.

De façon générale, le procédé consiste à présenter, debout et orientés, deux demi-cônes, apportés par deux chemins de glissement séparés et convergents se réunissant vers le bas, à les introduire simultanément côte à côte dans un dispositif de transfert, à les maintenir ainsi pendant toute la durée du transfert, à les évacuer et à les introduire côte à côte dans une coupelle préalablement admise dans le support d'un poste de garnissage avec l'assistance d'un dispositif d'accompagnement jusqu'à leur mise en place dans la coupelle correspondante puis à évacuer latéralement la coupelle ainsi garnie.

On décrira maintenant les moyens généraux puis particuliers utilisés pour mettre en oeuvre le procédé décrit de façon générale ci-dessus.

La machine automatique d'assemblage selon l'invention comprend les moyens généraux suivants.

En se référant à la figure 1, les demi-cônes proviennent d'un poste d'alimentation 13 comprenant deux voies symétriques d'alimentation convergentes 14 et 15 à partir de deux réserves, par exemple des bols vibrants 16 et 17, desquels partent deux guides d'amenée incurvés 18 et 19 convergeant vers un poste central d'assemblage 20.

Les guides d'amenée 18 et 19 peuvent être réalisés par divers moyens : profilés en gouttière à bords relevés, tubes ouverts...

Un mode de réalisation particulier selon l'invention se présente sous la forme d'un bloc de distribution 21 formé de deux parties ménageant entre elles deux chemins symétriques curvilignes dont le profil de section droite est représenté sur la figure 3. Ce profil présente par exemple une partie inférieure plane constituant une surface de glissement et une partie supérieure de forme adaptée à celle des pièces en demi-cône par exemple une saillie supérieure centrale longitudinale bombée 22 permettant un guidage longitudinal suffisant pour permettre de garder l'orientation des pièces et éviter tout coincement.

Bien entendu, toute autre forme de guidage convient.

Les chemins de glissement se rejoignent en partie inférieure par un tronçon commun 23.

L'absence de matière en extrémité inférieure due à la réunion des deux voies est compensée par une lame longitudinale séparatrice verticale 24 destinée à maintenir individualisés, jusqu'en position basse, les demi-cônes se faisant face.

On a réalisé ainsi de façon satisfaisante l'amenée des pièces en demi-cône jusqu'à un poste de transfert 25. Ces pièces avancent par glissement le long des guides en suite linéaire pour se retrouver en partie inférieure en disposition côte à côte individualisées par la lame séparatrice 24.

Le poste de transfert 25 apporte les demi-cônes en présentation verticale côte à côte jusqu'à un poste de garnissage 26 des coupelles situé légèrement au-delà.

Le poste de transfet 25 est constitué essentiellement d'un tiroir 27 de réunion et de distribution comportant un évidement 28 de forme circulaire adaptée à celle des demi-cônes, évidement qui le traverse de part en part. Cet évidement comporte une paroi médiane de séparation 29 destinée à assurer la prolongation de la lame séparatrice 24 en vue de maintenir pendant toute la durée du transfert les pièces en demi-cône en position debout, côte à côte.

Le tiroir est actionné en mouvements de va-et-vient par un vérin de transfert 30 entre une position de chargement dans laquelle il reçoit les pièces en demi-cône dans son évidement et une position de déchargement dans laquelle les pièces sont éjectées hors de l'évidement 28 par un dispositif vertical de poussée 31 à vérin de descente 32 et à poussoir 33 à fente 34 venant traverser le tiroir pour éjecter les pièces en demi-cône, la fente 34 venant glisser sur la paroi de séparation 29 de l'évidement 28 du tiroir.

Le tiroir de réunion et distribution 27 coulisse entre deux plans-supports : le premier 35 disposé juste en-dessous du bloc de distribution sert d'entretoise et le second de plan de maintien 36 destiné en outre à obturer la sortie de l'évidement 28.

A titre de variante, on prévoit d'équiper le poste de transfert d'un plateau rotatif recevant et distribuant les pièces en demi-cône sans aucun temps mort. En effet, les diverses positions successives du plateau rotatif correspondent à autant de positions actives pour des pièces différentes. La cadence s'en trouve ainsi notablement améliorée.

Le poste de garnissage est spécifiquement étudié pour le chargement des pièces en demi-cône dans les coupelles par introduction en partie supérieure, à partir de l'évidement 28 du tiroir. Il comprend spécifiquement le dispositif vertical de poussée 31, un dispositif de chargement 37, un mécanisme de soutien 38 ainsi qu'un mécanisme d'actionnement en rotation 39.

Divers dispositifs voisins complètent le fonctionnement de ce poste de garnissage. Il s'agit d'un ensemble d'alimentation 40 en coupelles et d'un ensemble d'évacuation 41 vers un réceptacle extérieur.

L'ensemble d'alimentation 40 des coupelles est réalisé par exemple sous la forme d'un rail vibrant d'amenée 42 à partir d'une réserve extérieure en coupelles par exemple un bol vibrant 43 ou tout autre dispositif du type magasin.

On examinera maintenant plus particulièrement le poste de garnissage. Il se situe en position centrale comme on peut le constater sur la figure 1.

Il s'agit d'un poste récepteur qui comporte un support porte-coupelles 44 rotatif du type à cavité réceptrice centrale 45 présentant un siège 46 pour les coupelles et un passage latéral 47 d'entrée et de sortie des coupelles ainsi qu'un levier d'actionnement en rotation 48.

Un exemple de réalisation est représenté sur la figure 8.

Le siège 46 affecte une forme en long à évidement longitudinal ouvert 49 le long duquel coulisse la naissance conique inférieure 12 des coupelles lors de leur introduction ou de leur éjection.

Les épaulements inférieurs des coupelles reposent sur des plats longitudinaux 50 et 51 qui bordent l'évidement 49. Le maintien en position de chargement est complété par les rebords de la cavité réceptrice 45 sur lesquels repose l'épaulement supérieur des coupelles.

Le bloc mécanique maintenant le support porte-coupelle 44 présente une partie supérieure en plateau 52 sur lequel repose le plan de maintien 36 ou se trouve en continuation avec celui-ci.

Le rail vibrant d'amenée 42 communique en extrémité avec l'entrée de la cavité lorsqu'orientée vers celui-ci.

Inversement, cette même entrée de cavité 47 sert de sortie pour communiquer avec l'ensemble d'éjection. Un vérin de rotation 53 entraîne la cavité en rotation sur elle-même, vérin dont l'extrémité de la tige est montée articulée sur le levier de manoeuvre 48.

Ce vérin permet de déplacer la cavité par rotation entre la position d'admission latérale d'une coupelle avant chargement et sa position d'éjection latérale par un vérin d'éjection 54 situé en disposition diamétralement opposée d'un tapis d'évacuation 55 qui emporte les coupelles garnies vers un réceptacle extérieur.

Afin d'obtenir une introduction parfaite des pièces en demi-cône dans les coupelles, on prévoit un doigt vertical d'accompagnement 56 de descente des pièces du tiroir jusque dans la coupelle.

Le doigt d'accompagnement 56 est actionné par un vérin de descente 57 apportant le maintien et l'amortissement nécessaires pendant toute la durée du mouvement de descente. Il traverse la coupelle et soutient les pièces pendant leur descente.

La descente des pièces en demi-cône s'effectue par la poussée vers le bas apportée par le poussoir fendu 33 actionné verticalement par le vérin de descente 32.

Le poussoir 33 traverse le tiroir pour faire glisser simultanément et côte à côte les deux pièces en demi-cône hors du tiroir de transfert 27 dans la coupelle, en vue de son chargement.

Le mouvement est guidé par la fente 34 du poussoir qui coulisse le long de la paroi médiane 29 de l'évidement 28 du tiroir.

L'ensemble est commandé en mouvements par une centrale pneumatique ou hydraulique chargée de coordonner les différents mouvements.

On expliquera maintenant en détail le fonctionnement de la machine automatique selon l'invention en se reportant plus particulièrement aux figures de 12 à 19.

Ce fonctionnement entièrement automatique permet, grâce à la combinaison des moyens selon l'invention, de maîtriser parfaitement l'introduction des pièces en demi-cône dans les coupelles à une cadence élevée égale au moins à 40 pièces par minute et notablement plus élevée dans la version à plateau tournant.

Pour des raisons de commodité, on décrira simultanément le procédé mis en oeuvre par la machine automatique d'assemblage indiquée ci-dessus.

Les pièces en demi-cône sont chargées en vrac dans les bols vibrants d'où elles ressortent en suites linéaires ininterrompues vers les chemins convergents de glissement 18 et 19. Elles progressent ensuite par pousséeglissement jusqu'en partie basse du bloc de distribution où chaque pièce en demi-cône se trouve disposée en correspondance côte à côte avec une pièce homologue debout verticalement à l'état juxtaposé avec interposition de la lame séparatrice 24 (figure 12).

Les pièces en demi-cône sont introduites par gravité dans l'évidement du tiroir 27 dans lequel elles se placent côte à côte grâce à la paroi de séparation et sont retenues prisonnières par le plan de maintien 36 et 52 qui obture son fond et constitue une surface de coulissement.

Le tiroir chargé est déplacé latéralement le long de ses surfaces de glissement par le vérin de translation en coulissant sur le plan de maintien 35 jusqu'à sa position de déchargement en dessous du dispositif de poussée 31 et au-dessus de la cavité réceptrice du poste de garnissage (figure 13).

Cette cavité est occupée par une coupelle préalablement admise dans celle-ci par l'ensemble d'alimentation 40 en coupelles à travers son entrée latérale 47 à partir de la voie d'alimentation.

La cavité 45 du support porte-coupelle est ensuite immédiatement entraînée en rotation sur elle-même d'un quart de tour pour bloquer l'entrée des autres coupelles. En effet, celles-ci sont apportées en suite continue par le rail vibrant d'amenée 42 et il importe d'individualiser les coupelles. Cette rotation est effectuée jusqu'à présentation de son ouverture devant le tapis d'évacuation 55.

L'éjection simultanée des pièces s'effectue par la traversée du tiroir du poussoir fendu 33 actionné par le vérin de descente et par soutien simultané des pièces en demi-cône par le doigt inférieur d'accompagnement qui traverse et coulisse à travers la coupelle par son passage central.

La poussée par le vérin de descente et le soutien simultané par le doigt d'accompagnement permettent une introduction parfaite côte à côte sans décalage dans chacune des coupelles (figure 14, 15 et 16).

On dégage ensuite la coupelle garnie par le retrait vers le haut du poussoir fendu 33 et celui vers le bas du doigt d'accompagnement 56 (figure 17).

Entre alors en action le vérin d'évacuation qui pousse la coupelle à l'extérieur de la cavité. Celle-ci traverse l'ouverture en glissant sur les plots de fond de cavité et se trouve chargée sur le tapis d'évacuation (figures 18 et 19).

L'invention a été décrite ci-dessus en détail. Il est bien entendu cependant que diverses modifications simples, adjonctions, variantes directes, substitutions par des moyens équivalents entrent dans le cadre de la présente protection, défini par les revendications formulées ci-après

Il en est ainsi du poste de transfert qui, comme indiqué précédemment, peut être équipé d'un plateau tournant assurant la même fonction de réunion et de distribution des pièces en demi-cône jusqu'au poste de garnissage.

Cette substitution confère l'avantage important de pouvoir augmenter notablement les cadences en raison de l'utilisation efficace des temps morts de déplacement en aller et en retour du tiroir de transfert.

## Revendications

1. Machine automatique pour la mise en place à grande cadence de pièces biconiques (23), formées chacune d'un demi-cône, dans des coupelles (6) leur servant de réceptable ou de logement, machine comportant deux voies d'amenée (14,15) descendantes alimentées en pièces demi-coniques, voies convergentes au-dessus d'un poste de réunion (25) des pièces demi-coniques, la machine comportant un moyen de présentation des pièces demi-coniques en position verticale et parallèlement ainsi qu'un poste d'alimentation (40) en coupelles vers un poste de garnissage (26), caractérisé en ce que :

. elle comporte un poste d'alimentation (13) à deux voies symétriques curvilignes d'amenée des pièces en demi-cônes, voies formées de guides d'amenée (18) et (19) convergeant vers un point bas, guides se présentant sous la forme de chemins de glissement curvilignes présentant chacun une saillie centrale longitudinale (22) de forme adaptée à celle des pièces en demi-cône, chemins se rejoignant en partie inférieure par un tronc commun (23) comportant une lame séparatrice verticale (24) ;

. elle comporte un poste de transfert (25) constitué d'un organe mobile de réunion et de distribution des pièces en demi-cône en position verticale, organe formé d'un tiroir (27) comportant un évidement central (28) de forme circulaire le traversant de part en part, évidement pourvu d'une paroi médiane de séparation (29) en vue de maintenir pendant le transfert, avec l'aide d'un plan-support inférieur (36), les pièces en demi-cône en position debout côte à côte, ledit tiroir étant actionné en mouvements de translation en va-et-vient par un vérin de transfert (30) entre une position de chargement dans laquelle il reçoit les pièces en demi-cône et une position de déchargement au poste de garnissage (26) dans un organe récepteur; ladite machine comporte en outre des postes d'éjection (54) et d'évacuation (41) des coupelles vers un réceptacle extérieur.

2. Machine selon la revendication 1, caractérisée en ce que le tiroir (27) coulisse entre deux plans-supports, le premier (35) disposé en dessous du bloc de distribution servant d'entretoise, le second de plan de maintien (36) permettant en outre d'obturer la sortie de l'évidement (28).

3. Machine selon la revendication 1, modifiée en ce que le poste de transfert (25) est à plateau rotatif et que le poste de garnissage (26) est décalé par rapport au poste d'alimentation (13) et se compose d'un poste récepteur comprenant un support rotatif porte-coupelle (44) et son levier (48) d'actionnement en rotation, d'un dispositif vertical de poussée et de déchargement (31) et (37), d'un dispositif d'accompagnement (38) des pièces en demi-cône lors du chargement, d'un ensemble d'alimentation (40) en coupelles sous la forme d'un rail vibrant et d'un ensemble d'évacuation (41) des coupelles garnies.

4. Machine selon la revendication 3, caractérisée en ce que le support porte-coupelle (44) est du type à cavité réceptrice (45) présentant un siège (46)

pour les coupelles et un passage latéral (47) d'entrée et de sortie des coupelles, ledit siège affectant une forme en long à évidement longitudinal ouvert (49) bordé de deux plats longitudinaux (50) et (51).

5. Machine selon l'une quelconque des revendications précédentes, caractérisée en ce que le dispositif d'accompagnement (38) est un doigt vertical d'accompagnement (56) traversant les coupelles par leur passage central, actionné par un vérin (57).

6. Machine selon l'une quelconque des revendications précédentes, caractérisée en ce que le dispositif vertical de poussée et de chargement (31) et (37) est un vérin de descente (32) à poussoir (33) pourvu d'une fente (34) qui traverse le tiroir pour éjecter les pièces en demi-cône, la fente (34) venant glisser sur la paroi de séparation (29) de l'évidement (28) du tiroir (27).

7. Machine selon les revendications 1 et 2, caractérisée en ce que le poste de transfert (25) est à plateau rotatif.

8. Procédé automatique de mise en place côte-à-côte à grande cadence de deux pièces demi-coniques (2,3) dans des coupelles (6) correspondantes, procédé utilisé sur les machines des revendications 1 à 7 et consistant à présenter debout, côte à côte et orientées, deux pièces (2,3) homologues en demi-cône, apportées par deux voies d'alimentation (14,15) séparées et convergeant vers le bas, caractérisé en ce qu'il consiste ensuite à les introduire simultanément côte à côte dans un organe de transfert (25), à les maintenir ainsi pendant la durée du transfert, à les introduire dans une coupelle (6) préalablement admise dans le support d'un poste de garnissage (26) avec l'assistance d'un dispositif d'accompagnement (38), à les pousser vers le bas tout en les soutenant par le bas du dispositif d'accompagnement jusqu'à leur mise en place dans les coupelles, puis à évacuer latéralement les coupelles ainsi garnies.

**Claims**

1. Automatic machine for positioning, at a high rate, split collets (2, 3), each formed of a half-cone, in collars (6) acting as a container or housing therefor, the machine comprising two descending supply paths (14, 15) supplied with split collets, the paths converging above a connecting point (25) for the split collets, the machine comprising a means of presenting the split collets in a vertical and parallel position, as well as a point (40) for supplying the collars to an assembly point (26), characterised in that:

— it comprises a supply point (13) with two symmetrical curved supply paths for split collets, which paths are formed by supply guides (18) and (19) converge towards a lower point, which guides are in the form of curved sliding tracks, each having a central longitudinal projection (22) of a shape adapted to that of the split collets, which tracks are joined in their lower part by a common shank (23) comprising a vertical separating blade (24);

— it comprises a transfer point (25) consisting of a mobile element for joining and distributing the split collets in a vertical position, the element being formed as a slide element (27) comprising a circular central recess (28) passing completely therethrough, the recess being provided with a median separating wall (29) intended to maintain the split collets in a standing position and adjacent one another during transport with the aid of a lower plane support (36), the said slide element being activated in reciprocating translation movements by a transfer jack (30), between a loading position in which it receives the split collets and an unloading position at the lining point (26) in a receiving device, the said machine further comprising points for ejecting (54) and removing (41) the collars towards an external container.

2. Machine according to Claim 1, characterised in that the sliding element (27) slides between two plane supports, the first (35) being disposed below the distribution unit acting as a spacer member, the second being the plane support (36) enabling furthermore the outlet of the recess (28) to be sealed.

3. Machine according to Claim 1, modified in that the transfer point (25) has a rotating plate; and in that the lining point (26) is offset in relation to the supply point (13) and consists of a receiving point comprising a rotating support (44) supporting the collars, and the rotary activation lever (48) thereof, a vertical thrust and unloading device (31) and (37), a device (38) accompanying the split collets during loading, a collar supply assembly (40) in the form of a vibrating rail and a removal assembly (41) for the assembled collars.

4. Machine according to Claim 3, characterised in that the support for supporting the collars (44) is of the type with a receiving cavity (45) having a seat (46) for the collars and a lateral inlet and outlet passage (47) for the collars, the said seat being longitudinally shaped with a longitudinal open recess (49) bordered by two longitudinal flats (50) and (51).

5. Machine according to any one of the preceding claims, characterised in that the accompanying device (38) is a vertical accompanying finger (56) traversing the plates via the central passage thereof, activated by a jack (57).

6. Machine according to any one of the preceding claims, characterised in that the vertical thrust and loading device (31) and (37) is a descending jack (32) with a pusher (33) provided with a slot (34), which traverses the sliding element in order to eject the split collets, the slot (34) sliding on the separating wall (29) of the recess (28) in the sliding element (27).

7. Machine according to Claims 1 and 2, characterised in that the transfer point (25) has a rotating plate.

8. Automatic method for positioning, side-by-side and at high speed, two split collets (2, 3) in corresponding collars (6), which method is used on the machines of Claims 1 to 7 and consisting in presenting, upright, adjacent one another and orientated, two homologous split collets (2, 3), supplied by two supply paths (14, 15) that are separate and converge at the bottom, characterised in that it subsequently consists in introducing them simultaneously, adjacent one another, into a transfer device (25), in maintaining them thus for the duration of the transfer, in introducing them into a collar (6) previously brought into the support of a point of alignment (26) with the aid of an accompanying device (38), in pushing them downwards whilst supporting them by the base of the accompanying device until they are positioned in the collars, and in then laterally removing the collars thus assembled.

**Patentansprüche**

1. Automatische Vorrichtung zum Einbringen von bi-konischen Teilen (2, 3), die jeweils aus einem Halb-Konus bestehen, in einer schnellen Abfolge in Ringe (6) die diesen als Aufnahme oder Halter dienen, mit zwei absteigenden Zufuhrwegen (14, 15), die mit halb-konischen Teilen bedient werden und die oberhalb einer zusammenführenden Arbeitsstation (25) der halb-konischen Teile zusammenlaufen, wobei diese Vorrichtung ein Vorhaltemittel für die halb-konischen Teile in vertikaler Lage und parallel zueinander und weiter eine Zuführungseinrichtung (40) für die Ringe zu einer Bestückungseinrichtung (26) aufweist , **dadurch gekennzeichnet:**

– daß sie eine Zuführungseinrichtung (13) mit zwei symmetrischen gekrümmten Wegen zur Zuführung der halb-konischen Teile aufweist, wobei diese Wege aus Bedienungs-Führungen (18 und 19) bestehen, die in einem tiefen Punkt zusammenlaufen, und die Führungen in der Gestalt von gekrümmten Gleitwegen ausgebildet sind, die jeweils einen zentralen, longitudinalen Vorsprung (22) mit einer den halb-konischen Teilen angepaßten Form aufweisen, wobei diese Wege sich im unteren Bereich in einen gemeinsamen Abschnitt (23) zusammenfügen, der eine vertikale Trennschneide (24); aufweist,

– daß sie eine Übergangs-Arbeitsstation (25) umfaßt, die aus einem beweglichen Verbindungs- und Verteilungs-Element für die in vertikaler Position befindlichen Teile in halbkonischer Form besteht, wobei dieses Element aus einem Schubfach (27) gebildet wird, das eine mittige Aussparung (28) mit einer kreisförmigen Gestalt aufweist, die es von einer Seite zur anderen durchquert, wobei diese Ausnehmung eine mittige Trennwand (29) aufweist, um die halb-konischen Teile während des Übergangs mit der Hilfe einer unteren Stützebene (36) in einer Lage aufrecht und Seite an Seite zu halten, wobei das Schubfach durch eine eine Hin- und Her-Bewegung auführende Translationsbewegung über eine Übergangsstellglied (30) zwischen einer Lade-Position, in der es die halb-konischen Teile aufnimmt, und einer Entlade-Position zur Bestückungs-Arbeitsstation (26) in einem Aufnahmeelement betätigbar ist, wobei die Vorrichtung weiterhin eine Auswurf-Arbeitsstation (54) und Entleerungs-Arbeitsstation (41) für die Ringe in eine äußeres Aufnahmegefäß aufweist.

2. Vorrichtung nach Anspruch 1, dadurch gekennzeichnet, daß das Schubfach (27) zwischen zwei Stützebenen verschieblich ist, wobei die erste (35) unterhalb des Verteilerblockes angeordnet ist und als Abstandesstück dient, und die zweite es als Halteebene (36) gestattet, den Ausgang der Aussparung (28) zu verschließen.

3. Vorrichtung nach Anspruch 1, gegenüber dieser dadurch geändert, daß die Übergangs-Arbeitsstation (25) eine rotierende Ebene ist und daß die Bestückungs-Arbeitsstation (26) bezüglich der Zuführungs-Arbeitsstation (13) seitlich verschoben ist und aus einer Aufnahmestation, die einen drehbaren Ring-Träger (44) und seinen in Rotation betätigbaren Hebel (48) umfaßt, aus einer vertilaken Vorschieb- und Entlade-Einrichtung (31 und 37), aus einer Begleit-Einrichtung (38) für die halb-konischen Teile während der Beladung, aus einer Zuführungseinrichtung (40) für die Ringe in Gestalt einer vibrierenden Schiene und aus einer Auswurfeinrichtung (41) der bestückten Ringe besteht.

4. Vorrichtung nach Anspruch 3, dadurch gekennzeichnet, daß der Ring-Träger (44) vom Typ eines aufnehmenden Hohlraums (45) ist, der einen Sockel (46) für die Ringe und einen seitlichen Eingangs- und Ausgangsdurchgang (47) für die Ringe aufweist, wobei der besagte Sockel eine längliche Form mit in Längsrichtung offen gestalteten Ausnehmungen (49) annimmt, die von zwei länglichen Ebenen (50 und 51) berandet werden.

5. Vorrichtung nach einem der vorstehenden Ansprüche, dadurch gekennzeichnet, daß die begleitende Einrichtung (38) ein vertikaler begleitender Finger (56) ist, der die Ringe durch ihre mittige Öffnung durchquert und durch ein Stellglied (57) betätgit wird.

6. Vorrichtung nach einem der vorstehenden Ansprüche, dadurch gekennzeichnet, daß die vertikale Vorschieb- und Ladeeinrichtung (31 und 37) ein absteigendes Stellglied (32) mit Drücker (33) ist, welches einen Schlitz (34) aufweist, der die Schublade durchquert, um die halb-konischen Teile auszuwerfen, wobei der Schlitz (34) auf der Trennwand (29) von der Ausnehmung (28) des Schubfachs (27) aufgleitet.

7. Vorrichtung nach den Ansprüchen 1 und 2, dadurch gekennzeichnet, daß die Übergangsstation (25) in einer rotierenden Ebene ausgestaltet ist.

8. Automatisches Verfahren zur Anordnung Seite an Seite von zwei halb-konischen Teilen (2, 3) in entsprechenden Ringen (6) in schneller Abfolge, welches bei Vorrichtungen nach einem der Ansprüche 1 bis 7 angewendet wird und darin besteht, aufrecht, Seite an Seite und ausgerichtet zwei homologe halb-konische Teile (2, 3) vorzulegen, die durch zwei getrennte Zufuhrwege (14, 15) herbeigeführt werden, die nach unten zusammenlaufen, **dadurch gekennzeichnet**, daß diese anschließend gleichzeitig Seite and Seite in ein Übergangselement (25) eingeführt werden, diese so während der Übergangszeit festzuhalten, sie in einen vorher in dem Träger einer Bestückungsstation (26) eingebrachten Ring (6) mit der Hilfe eine Begleiteinrichtung (38) einzuführen, sie nach unten zu drücken und sie währenddessen von unterhalb der Begleitvorrichtung zu stützen, bis sie in den Ringen eingelassen sind, und anschließend die derart bestückten Ringe seitlich herauszuführen.

FIG.1

FIG.2

FIG.3

FIG.4

FIG.5

FIG.6

FIG.7

## FIG.8

## FIG 9

## FIG.10

FIG.11b

FIG.11a

FIG.11c

14

EP 0 328 471 B1

FIG.12

FIG.13

FIG.14

FIG.15

FIG.16

FIG.17

FIG.18

FIG.19